# EUROPÄISCHE PATENTSCHRIFT

(11) **EP 0 470 554 B1**
(45) Veröffentlichungstag und Bekanntmachung des Hinweises auf die Patenterteilung: **08.11.1995**
(21) Anmeldenummer: 91113139.9
(22) Anmeldetag: 05.08.1991
(51) Int. Cl.: D21F 5/02

(54) **Walze mit Heizeinrichtung**
Roller with heating means
Rouleau avec dispositif chauffant

(30) Priorität: 09.08.1990 DE 4025274; 25.10.1990 DE 4033986
(43) Veröffentlichungstag der Anmeldung: 12.02.1992
(73) Patentinhaber: Schwäbische Hüttenwerke Gesellschaft mit beschränkter Haftung, D-73414 Aalen (DE)
(72) Erfinder: Zaoralek, Heinz-Michael, Dr., W-7923 Königsbronn (DE)
(74) Vertreter: Schwabe - Sandmair - Marx

(56) Entgegenhaltungen:
- EP-A- 0 285 081
- DE-A- 1 811 690
- DE-A- 2 400 615
- DE-C- 839 446
- FR-A- 1 417 795
- FR-A- 1 462 089

## Beschreibung

Die Erfindung betrifft eine beheizbare Walze, insbesondere zur Bearbeitung von bahnartigen Materialien wie beispielsweise Papier, nach dem Oberbegriff des Anspruchs 1.

Für die Bearbeitung von bahnartigen Materialien, wie zum Beispiel Papier, sind Walzen bekannt, die von innen beheizbar sind, vgl. FR-A- 1 462 089. Bei einer üblichen Ausführungsform strömt ein erwärmter, flüssiger Wärmeträger durch Kanäle bzw. Bohrungen, die dicht unter der Walzenoberfläche ausgebildet sind. Dabei gibt der Wärmeträger seine Wärmeenergie, zumindest teilweise, an die Bohrungswand und damit an die Walzenwand ab. Die Walzenwand überträgt die Wärmeenergie auf das zu bearbeitende bahnförmige Material, um es beispielsweise zu trocknen.

Bei dieser bekannten Ausführungsform für eine beheizbare Walze ist eine externe Einrichtung erforderlich, um die Wärmeträgerflüssigkeit zu erwärmen und auf einer vorbestimmten Temperatur zu halten. In manchen Ländern, wie beispielsweise Schweden, werden Behälter aus Gußeisen nicht für geschlossene Wärmeträger-Kreisläufe mit Temperaturen von über 140 °C zugelassen. Demnach können Hartgußwalzen nicht auf Temperaturen oberhalb der angegebenen Maximaltemperatur beheizt werden. Andererseits werden hohe Temperaturen bei der Behandlung von bahnartigen Materialien angestrebt. So ist es zum Beispiel in Deutschland durchaus üblich, Walzentemperaturen von 200 °C und mehr zu verwenden.

Es sind weiterhin beheizbare Walzen bekannt, bei denen der Walzenmantel um einen feststehenden Kern rotiert. Dabei ist der feststehende Kern mit einer oder mehreren Induktionsspulen bestückt. Im Betrieb werden über die Induktionsspulen Wirbelströme in den rotierenden Walzenmantel induziert, die diesen durch ohm'sche Wärme aufheizen.

Eine derartige Ausführungsform einer beheizbaren Walze hat den Nachteil, daß diese äußerst empfindlich ist, weil bei einer praktischen Ausführungsform, zum Beispiel zum Einsatz in einen Papierkalander, ein Walzenrohr über eine Spannweite von über 8 m über einem Spulenkern von derselben Länge freitragend abzustützen ist. Stöße, die im praktischen Betrieb eines Papiermaschinenglättwerkes nicht vermieden werden können, und Unwuchten, die in der Regel bei beheizbaren Walzen in mehr oder weniger großem Ausmaß auftreten, führen zwangsläufig zu Schwingungen, die in Berührungen zwischen drehenden und feststehenden Teilen resultieren. Dies zieht zwangsläufig die Beschädigung der betreffenden Teilen nach sich. Ein vorzeitiger Verschleiß oder sogar ein Totalausfall würden die Folge sein.

Schließlich sei erwähnt, daß beheizbare Hartgußwalzen, die eine externe Zuführung von Wärmeträgerflüssigkeit besitzen, in Ländern, wie beispielsweise Schweden, hinsichtlich des Volumeninhaltes an Wärmeträgerflüssigkeit unter weitere Sicherheitsbestimmungen fallen. Diese Sicherheitsbestimmungen sollen die Gefahr eindämmen, die bei einem Bruch derartiger Walzen von der ausströmenden Wärmeträgerflüssigkeit ausgeht.

Aufgabe der vorliegenden Erfindung ist es, den Nachteilen des Standes der Technik abzuhelfen, und insbesondere eine beheizbare Walze vorzuschlagen, die eine höhere Sicherheit und größere Zuverlässigkeit aufweist.

Diese Aufgabe wird durch eine beheizbare Walze mit den im Anspruch 1 aufgeführten Merkmalen zuverlässig gelöst.

Weitere zweckmäßige Ausführungsformen werden durch die Merkmale in den Unteransprüchen festgelegt.

Erfindungsgemäß werden in die peripheren Bohrungen im Walzenkörper einer beheizbaren Walze stabförmige Heizelemente eingesetzt, die sich in die gleiche Richtung wie die Bohrungen, also axialparallel zum Walzenkörper, erstrecken.

Sind diese Heizelemente zweckmäßigerweise als elektrische Widerstandsheizelemente ausgebildet, so ist es möglich, auf rotierende Dichtköpfe an den Zapfen zu verzichten, da nun keine Wärmeträgerflüssigkeit in die Walze eingeleitet oder aus der Walze abgeführt werden muß, um einer externen Heizeinrichtung zugeführt zu werden.

Bei dieser Ausführungsform wird die notwendige elektrische Heizenergie zum Beispiel über Schleifkontakte an einem der beiden Zapfen der beheizbaren Walze zugeführt. Über ein Leitungssystem innerhalb des Walzenkörpers wird der elektrische Strom dann zu den elektrischen Widerstandsheizelementen geführt. Die Übertragung der Heizenergie vom Widerstandsheizelement auf die Walze erfolgt über Konvektion mittels einer geeigneten Konvektionsflüssigkeit, z.B. Wasser. Diese Ausführungsform hat den Vorteil, daß nur eine relativ geringe Menge an Konvektionsflüssigkeit benötigt wird, nämlich nur die Menge, die in den in der Regel abgedichteten peripheren Bohrungen bzw. Kanälen nahe der Walzenoberfläche dichtend eingeschlossen ist.

Bei einer weiteren, äußerst zweckmäßigen Ausführungsform sind in den peripheren, axialparallelen Bohrungen Rohre, in der Regel Stahlrohre, eingesetzt, durch die die Wärmeträgerflüssigkeit, sozusagen getrennt von dem Material der Hartgußwalze, hindurchgeführt wird. Ein hinreichender Wärmekontakt zwischen dem eingeführten Rohr und dem Material der Hartgußwalze läßt sich ebenfalls durch die Füllung des Zwischenraumes zwischen Rohr und Bohrung mit einer Konvektionsflüssigkeit bewerkstelligen.

Diese Ausführungsform hat den Vorteil, daß der Tatbestand für die genannten Sicherheitsbestimmungen nicht auf derartige Walzen zutrifft, so daß diese Sicherheitsbestimmungen hier nicht greifen.

Dabei wird das Volumen der Konvektionsflüssigkeit in den einzelnen, voneinander getrennten peripheren Bohrungen in der Regel so gering sein, daß trotz der zu erwartenden Drücke keine Zulassungsprobleme zu erwarten sind.

Diese Ausführungsform hat demzufolge den Vorteil, daß es möglich ist, einen extern zu beheizenden Wärmeträger und trotzdem Temperaturen oberhalb von 140 °C in den Ländern mit hohen Sicherheitsanforderungen zu verwenden, da die Wärmeträgerflüssigkeit in diesem Falle keinen unmittelbaren Kontakt zum Hartgußmaterial der beheizbaren Walze hat, sondern in der Regel ausschließlich in einem System von Stahlröhren geführt wird.

Durch die nahe bei der Oberfläche eingebrachten peripheren Kanäle, in denen die Heizelemente angeordnet sind, befindet sich die Wärmequelle nahe an dem Ort, wo der Wärmebedarf anfällt. Temperaturgefälle durch lange Transportwege treten hierdurch kaum auf. Das Prinzip der elektrischen Widerstandsheizung ist sehr einfach und robust, so daß kaum Betriebsstörungen zu erwarten sind. Durch die Füllung mit Konvektionsflüssigkeit wird die Temperatur der Heizelemente weit unter den üblichen Temperaturen für Widerstandsheizelemente gehalten, so daß die Lebensdauer der Heizelemente praktisch unbegrenzt ist.

Bei einer weiteren vorteilhaften Ausführung wird der Raum zwischen Heizrohr und Bohrung nur teilweise mit einer siedefähigen Konvektionsflüssigkeit, z.B. Wasser, gefüllt, im übrigen aber evakuiert.

Da der Wärmeaustausch zwischen den Heizelementen und der Walzenwand nicht direkt erfolgt, sondern über die Konvektionsflüssigkeit, ist gewährleistet, daß die Temperaturverteilung in axialer Richtung sehr gleichmäßig ist. Eine Kondensation von Wasserdampf wird in einem derartigen System dort erfolgen, wo die Temperatur am niedrigsten ist. Damit erfolgt die Wärmezufuhr automatisch genau an der Stelle, die den größten Wärmebedarf hat, bzw. deren Temperatur die größte Differenz gegenüber anderen Stellen aufweist. Die Kondensatmenge wird in gleicher Weise geregelt, d. h., um so größer die Temperaturdifferenz zu einem bestimmten Bereich hin ist, um so größer wird dort auch die Kondensatmenge sein. Auf diese Weise wird eine äußerst ausgeglichene Oberflächentemperatur der Walze erreicht, wobei trotzdem zusätzlich erhöhte Sicherheit und Zuverlässigkeit im Vordergrund stehen.

Zweckmäßigerweise ist zur Temperaturregelung nahe der Oberfläche des Walzenmantels mindestens ein Temperaturfühler vorgesehen. Über einen konventionellen Regelschaltkreis kann auf diese Weise schnell auf Temperaturabweichungen reagiert werden.

Im folgenden wird die Erfindung an bevorzugten Ausführungsformen unter Bezugnahme auf die anliegenden Figuren näher erläutert. Dabei werden weitere Vorteile und Merkmale der Erfindung offenbart. Es zeigen:
- Fig. 1: einen Längsschnitt durch eine bevorzugte Ausführungsform der erfindungsgemäßen beheizbaren Walze, und
- Fig. 2: einen Ausschnitt aus einem Längsschnitt einer weiteren bevorzugten Ausführungsform einer erfindungsgemäßen beheizbaren Walze.

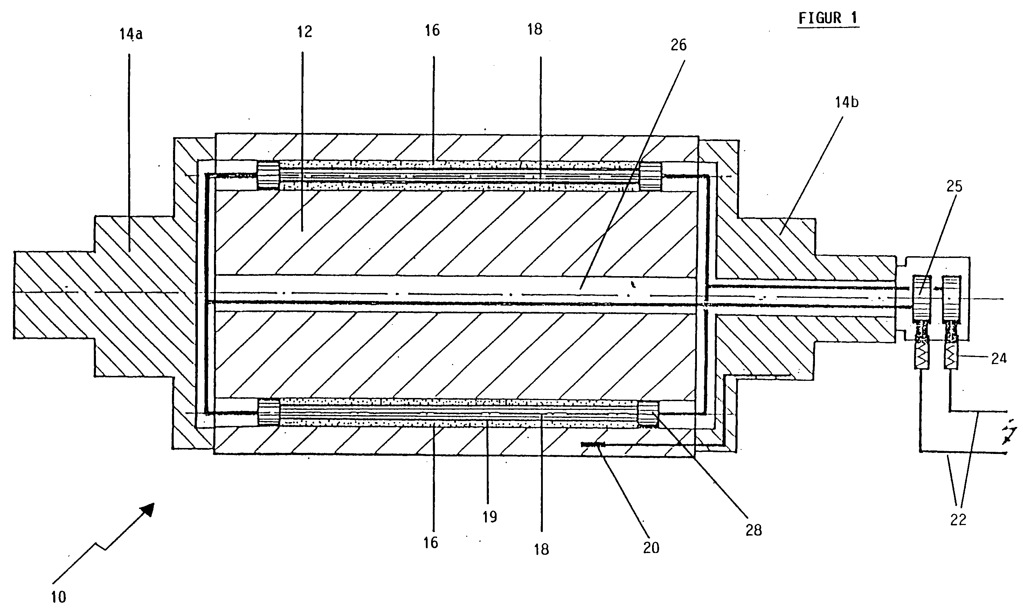

In Fig. 1 ist eine erfindungsgemäße beheizbare Walze allgemein durch das Bezugszeichen 10 bezeichnet. Diese Walze 10 weist einen Walzenkörper 12 auf, an dessen Enden Flansche oder Zapfen 14a, 14b angebracht sind. In der Regel werden derartige Zapfen 14a, 14b mit Bolzen oder dergleichen angeschraubt. Über den Zapfen 14b, der sich in einem hier nicht dargestellten Walzenlager befindet bzw. darin geführt wird, über Zuleitungen 22 und über Schleifkontakte 24 sowie Stromaufnehmer 25 wird elektrische Energie in den Walzenkörper 12 geführt. Der Zapfen 14a wird sowohl zur Führung in dem Walzenlager als auch zum Antrieb für die Drehbewegung der Walze 10 verwendet.

Nahe der Walzenoberfläche ausgelegte periphere, axialparallele Bohrungen 16 sind mit Heizvorrichtungen 18 versehen, bei denen es sich im vorliegenden Falle um elektrische Widerstandsheizelemente 18 handelt.

An den jeweiligen Enden der Heizelemente 18 sind Dichtungen 28 angeordnet, die die für die Heizung verwendeten Flüssigkeiten dichtend einschließt. In der Regel werden die Dichtungen 28 möglichst nahe an den jeweiligen Enden des Walzenkörpers 12 vorgesehen sein, um einen gleichmäßigen Heizeffekt über den gesamten Walzenkörper 12 zu erzielen. Im Raum zwischen den Heizelementen 18 und der Bohrungswandung der Bohrung 16 befindet sich die Konvektionsflüssigkeit. Dabei handelt es sich zum Beispiel um Wasser. Dabei ist der Zwischenraum zwischen dem Rohr 19 und der Wandung der Bohrung 16 in der Regel nur zum überwiegenden Teil mit Wasser gefüllt.

Die Widerstandswerte des elektrischen Widerstandsheizelementes 18 sind an die erforderliche Heizleistung und Lebensdauererwägungen angepaßt angepaßt.

Eine zentral im Walzenkörper 12 angelegte Bohrung 26 dient zur Hin- bzw. Rückleitung des elektrischen Versorgungsstromes.

Mindestens ein Temperaturfühler 20 ist nahe der Oberfläche der beheizbaren Walze 10 vorgesehen.

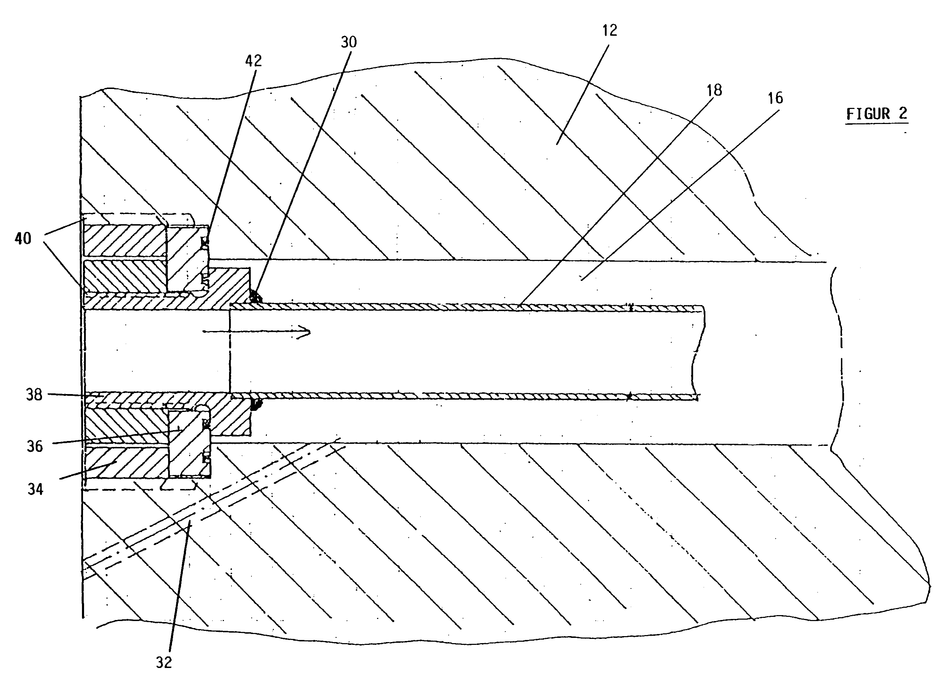

Aus Fig. 2 ist eine weitere bevorzugte Ausführungsform der erfindungsgemäßen Walze 10 ersichtlich. Der dargestellte Ausschnitt befindet sich an einem Ende des Walzenkörpers 12.

Bei dieser Ausführungsform wird ein Wärmeträger (zum Beispiel Thermoöl) walzenextern beheizt und über einen rotierenden Dichtkopf an einem der Flansche 14a oder 14b in die Walze 10 eingeleitet. Innerhalb des Walzenkörpers 12 wird der Wärmeträger durch Rohre, in der Regel Stahlrohre, geführt, die in den peripheren Bohrungen 16 dichtend gehaltert sind. In den Rohren 18 wird die temperierte Wärmeträgerflüssigkeit geführt, die ihre Wärmeenergie über die Wandung des Rohres 18 an eine Konvektionsflüssigkeit abgibt, die sich in dem abgedichteten Zwischenraum zwischen dem Rohr 18 und der Wandung der peripheren Bohrung 16 befindet. Die Konvektionsflüssigkeit, die diesen Hohlraum meist nur teilweise ausfüllt, besteht vorzugsweise aus Wasser.

Das Rohr 18 ist in einen Flanschkörper 38 eingesetzt, der mit einem entsprechenden Flanschkörper 38 auf der entgegengesetzten Seite des Walzenkörpers 12 das Rohr 18 in der Bohrung 16 einspannt und damit hält. Eine Schweißnaht 30 sorgt für die Abdichtung des Inneren des Rohres 18 gegenüber dem Hohlraum zwischen dem Rohr 18 der Wandung der Bohrung 16. Ein Andruckkörper 36, der mit Dichtungen 42 versehen ist, dichtet den Hohlraum zwischen dem Rohr 18 und der Bohrung 16 stirnseitig ab. Der Andruckkörper 36 wird über eine bzw. mehrere Schraubmuttern 34 mit Außen- bzw. Innengewinde 40 angepreßt bzw. im Walzenkörper 12 gehalten.

Zum Einfüllen bzw. Nachfüllen der zweiten Wärmeträgerflüssigkeit (destilliertes Wasser) kann eine Bohrung 32 vorgesehen sein, die in den Hohlraum zwischen dem Rohr 18 und der Wandung der peripheren Bohrung 16 führt. Diese zusätzliche Versorgungsbohrung 32 muß selbstverständlich dicht verschließbar sein.

Da der Wärmeaustausch zwischen den Heizelementen 18 und dem Walzekörper 12 nicht direkt erfolgt, sondern über die siedende Konvektionsflüssigkeit, ist gewährleistet, daß die Temperaturverteilung in axialer Richtung des Walzenkörpers 12 sehr gleichmäßig ist. Eine Kondensation von Wasserdampf wird in diesem System vorzugsweise dort erfolgen, wo die Temperatur am Walzenkörper 12 niedriger ist. Damit erfolgt die Wärmezufuhr am Walzenkörper 12 automatisch genau an der Stelle, die Temperaturabweichungen aufweist. Auf diese Weise wird eine sehr ausgeglichene Oberflächentemperatur der erfindungsgemäßen Walze 10 erreicht.

## Patentansprüche

1. Beheizbare Walze, insbesondere zur Bearbeitung von bahnartigen Materialien, wie zum Beispiel Papier,
a) mit einem Walzenkörper mit peripheren Kanälen bzw. Bohrungen, die vorzugweise axialparallel zum Walzekörper angelegt sind,
b) mit mindestens einem, in der Regel zwei, Flanschzapfen, und
c) mit Heizelementen (18), die in den Bohrungen angeordnet sind, und die sich in axialer Richtung parallel zum Walzenkörper (12) erstrecken,
**dadurch gekennzeichnet,** daß
d) in den peripheren Bohrungen bzw. Kanälen (16) zwischen den Heizelementen (18) und den Wandungen der Bohrungen (16) ein dichter Hohlraum verbleibt, und daß
e) die Hohlräume teilweise mit einem bei einer vorbestimmten Heiztemperatur siedenden Medium, vorzugsweise Wasser, gefüllt sind.

2. Beheizbare Walze nach Anspruch 1, dadurch gekennzeichnet, daß die Heizelemente (18) stabförmige elektrische Widerstandsheizelemente sind.

3. Beheizbare Walze nach Anspruch 1, dadurch gekennzeichnet, daß die Heizelemente (18) Rohre, zum Beispiel Stahlrohre, sind, die von einer Wärmeträgerflüssigkeit durchströmt werden.

4. Beheizbare Walze nach einem der Ansprüche 1 bis 3, dadurch gekennzeichnet, daß ein Temperaturfühler (20) nahe bei der Oberfläche des Walzenkörpers (12) vorgesehen ist.

## Claims

1. A heatable roll, in particular for processing web-like material, for example paper, comprising
a) a roll body having peripheral passages or bores which are formed preferably parallel to the axis of the roll body,
b) at least one, as a rule two, journal pins, and
c) heating elements (18) which are arranged in the bores and which extend in the axial direction parallel to the roll body (12),
**characterized in that**
d) in the peripheral bores or passages (16) between the heating elements (18) and the walls of the bores (16) a sealed cavity remains, and that
e) the cavities are at least partially filled with a medium, preferably water, boiling at a predetermined heating temperature, preferably water.

2. A heatable roll according to claim 1, characterized in that the heating elements (18) are rod-like electrical resistance heating elements.

3. A heatable roll according to claim 1, characterized in that the heating elements (18) are tubes, for example steel tubes, which are traversed by a heat-carrier liquid.

4. A heatable roll according to one of the claims 1 to 3, characterized in that a temperature sensor (20) is provided near the surface of the roll body (12).

## Revendications

1. Rouleau chauffant, en particulier pour le traitement de matériaux en bande, comme par exemple du papier,
a) avec un corps de rouleau muni de canaux ou d'alésages périphériques, disposés de préférence parallèlement à l'axe du corps du rouleau,
b) avec au moins un, en règle générale, deux pivots à bride, et
c) avec des éléments chauffants (18), disposés dans les alésages, et s'étendant axialement parallèlement au corps du rouleau (12),
caractérisé en ce que
d) dans les alésages ou canaux périphériques (16) entre les éléments chauffants (18) et les parois' des alésages (16) se trouve une chambre étanche, et en ce que
e) les chambres sont remplies partiellement d'un fluide s'évaporant à une température de chauffage prédéterminée, de préférence de l'eau.

2. Rouleau chauffant selon la revendication 1, caractérisé en ce que les éléments chauffants (18) sont des éléments chauffants à résistance électrique sous forme de barres.

3. Rouleau chauffant selon la revendication 1, caractérisé en ce que les éléments chauffants (18) sont des tubes, par exemple des tubes d'acier, qui sont parcourus par un fluide caloporteur.

4. Rouleau chauffant selon l'une des revendications 1 à 3, caractérisé en ce qu'un capteur de température (20) est prévu près de la surface du corps de rouleau (12).
